# EUROPEAN PATENT SPECIFICATION

(11) **EP 2 490 963 B1**
(45) Date of publication and mention of the grant of the patent: **07.08.2013**
(21) Application number: 10773949.2
(22) Date of filing: 20.10.2010
(51) Int. Cl.: B65D 85/804

(54) **CARTRIDGE FOR THE PREPARATION OF BEVERAGES**
PATRONE ZUR ZUBEREITUNG VON GETRÄNKEN
CARTOUCHE POUR LA PREPARATION DE BOISSONS

(30) Priority: 22.10.2009 GB 0918575
(43) Date of publication of application: 29.08.2012
(73) Proprietor: Kraft Foods R & D, Inc., Northfield, IL 60093 (US)
(72) Inventor: YORK, Geoffrey, Walsall West Midlands WS3 4QX (GB)
(74) Representative: Bucks, Teresa Anne
(86) International application number: PCT/GB2010/001953
(87) International publication number: WO 2011/048377

(56) References cited:
- EP-A1- 1 716 055
- WO-A1-01/58786

## Description

The present invention relates to a cartridge for the preparation of beverages and which contain one or more ingredients for the preparation of beverages.

It is known to use foamed milk in the preparation of beverages such as cappuccino coffee. Traditionally foamed milk has been produced by using a steam wand to direct a steam jet into a reservoir of milk. This is still the primary method of producing foamed milk in a commercial environment. It is desirable to be able to prepare cappuccino-style beverages in the home. However, it is inconvenient to use steam jet equipment in the home since it can be dangerous if not used correctly and can be difficult to clean. This is particularly disadvantageous for equipment used with milk which requires thorough cleaning to prevent contamination.

A cartridge for a domestic beverage machine which is suitable for producing foamed milk is known from EP 1 716 055. Foamed milk is produced within the cartridge by causing air to become entrained in a stream of milk. It is an object of the present invention to provide an improved cartridge for producing foamed beverages, particularly foamed dairy-based beverages.

Accordingly, the present invention provides a cartridge containing one or more beverage ingredients, said cartridge comprising:
an inlet for the introduction of an aqueous medium into the cartridge; an outlet for a beverage produced from said one or more beverage ingredients;
an aperture in a beverage flow path linking the inlet to the outlet which generates, in use, a jet of beverage;
an expansion chamber located downstream of the aperture, wherein the expansion chamber comprises an expansion chamber inlet for receiving the jet of beverage and an expansion chamber outlet; and an air inlet located in the expansion chamber in the vicinity of the expansion chamber inlet;
   wherein the cross-sectional area of the expansion chamber decreases in a downstream direction from the expansion chamber inlet to the expansion chamber outlet, and the cross-sectional area and profile of the expansion chamber outlet are substantially the same as the cross-sectional area and profile of the beverage stream as it passes through the outlet.

The characteristic-shape of the expansion chamber efficiently encourages air to be entrained into the beverage stream as it passes through the expansion chamber The decreased cross-sectional area of the expansion chamber at the expansion chamber outlet helps to prevent beverage being drawn back into the expansion chamber in preference to air, which will reduce the efficiency of the air suction from atmosphere. The improved design results in a greater volume of foamed beverage being produced compared with previously known cartridges.

Preferably the cross-sectional area of the expansion chamber inlet is greater than the cross-sectional area of the jet generating aperture.

In particular, the relatively large cross-sectional area of the expansion chamber in the immediate vicinity of the air inlet provides a relatively large low pressure volume around the incoming jet of beverage thereby allowing the air to relatively easily enter the expansion chamber.

Preferably a floor and a roof of the expansion chamber converge towards one another in the downstream direction.

The expansion chamber may comprise opposing sidewalls and the sidewalls may converge in the downstream direction.

Preferably the aperture is aligned such that the jet of beverage issuing from the aperture passes from the expansion chamber inlet to the expansion chamber outlet substantially without contacting the floor of the expansion chamber.

More preferably the aperture is aligned such that the jet of beverage issuing from the aperture passes from the expansion chamber inlet to the expansion chamber outlet substantially without contacting the one or more sidewalls of the expansion chamber.

Preferably the air inlet is formed in a floor of the expansion chamber.

Preferably the air inlet comprises an elongated slot.

Preferably the elongated slot is aligned perpendicularly to the direction of flow of a jet of beverage issuing from the aperture.

In one preferred aspect the mixing chamber comprises an outlet aperture communicating with the outlet of the cartridge;
the mixing chamber further comprising a plurality of projections located in spaced arrangement around the mixing chamber outlet aperture.

Preferably the projections are arranged around a first portion of a periphery of the mixing chamber outlet aperture and a second portion of the periphery of the mixing chamber outlet aperture is free of the projections, wherein the second portion of the periphery is aligned with the expansion chamber outlet and is sized such that the jet of beverage issuing in use from the expansion chamber outlet is enabled to enter a central region of the mixing chamber without first impacting on the projections.

The projections may be arranged in an arc. Preferably, the projections are arranged in a circular arc.

Preferably the cartridge comprises between 3 and 20 projections.

Preferably the projections act to reduce areas of stagnant flow in use within the mixing chamber. The projections help to eliminate open spaces in which the flow of beverage may become relatively 'stagnant'. It has been found that such 'stagnant' areas allow small air bubbles to coalesce into undesirably larger air bubbles. The projections help to eliminate this problem by breaking up the flow patterns within the mixing chamber to encourage smaller scale turbulent flow patterns which prevent bubble coalescence compared to larger scale eddy patterns which are prone to bubble coalescence. The foam produced is therefore of a better quality than foamed beverage produced from previously known cartridges.

The one or more beverage ingredients may be liquid ingredients. The one or more beverage ingredients may be liquid dairy-based ingredients, such as liquid concentrated milk. The liquid milk may be pasteurised or sterilised by known methods such as UHT treatment, flash pasteurisation, retorting, etc.

Preferably the cartridge is sealed prior to use in a beverage preparation machine to form a beverage.

The invention further provides a method of making a beverage from a cartridge containing one or more beverage ingredients, the method comprising the steps of:
generating a jet of beverage into an expansion chamber in the cartridge;
entraining air into the jet of beverage as it passes through the expansion chamber;
characterised by the step of substantially matching a cross-sectional area and profile of an outlet of the expansion chamber to the cross-sectional flow area and profile of the beverage stream at the downstream end of the expansion chamber.

The invention further provides a method of making a beverage from such a cartridge, the method comprising the steps of placing the cartridge in a beverage dispensing machine adapted to receive the cartridge and dispensing a beverage therefrom.

The invention still further provides a beverage dispensing system comprising such a cartridge and a beverage dispensing machine adapted to receive the cartridge and to dispense a beverage therefrom.

It will be understood that by the term "cartridge" as used herein is meant a package, container, sachet or receptacle which contains one or more beverage ingredients in the manner described and is suitable for use with a beverage preparation machine. The cartridge may comprise a single component or an equivalent of multiple components, such as a soft pad located in a separate pad holder. Preferably the cartridge is adapted to produce an individual serving of beverage. The cartridge may be rigid, semi- rigid or flexible. The inlet and outlet of the cartridge may be open or require opening in use by, for example, piercing.

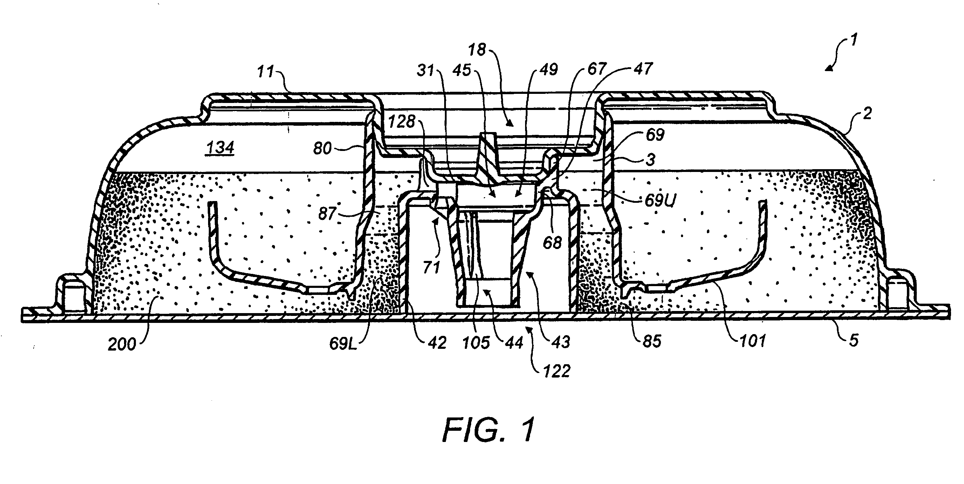

In the following description the terms "upper" and "lower" and equivalents will be used to describe the relational positioning of features of the invention. The terms "upper" and "lower" and equivalents should be understood to refer to the cartridge (or other components) in its normal orientation for insertion into a beverage preparation machine and subsequent dispensing as shown, for example, in Figure 1. In particular, "upper" and "lower" refer, respectively, to relative positions nearer or further from a top surface 11 of the cartridge. In addition, the terms "inner" and "outer" and equivalents will be used to describe the relational positioning of features of the invention. The terms "inner" and "outer" and equivalents should be understood to refer to relative positions in the cartridge (or other components) being, respectively, nearer or further from a centre or major axis of the cartridge 1 (or other component).

An embodiment of the present invention will now be described, by way of example only, with reference to the accompanying drawings, in which:
Figure 1 is a cross-sectional drawing of a prior art cartridge as taught in EP 1 716 055;
Figure 2 is a perspective view of part of an inner member of a cartridge of the type described in EP 1 716 055;
Figure 3 is an enlarged perspective view of part of the inner member shown in Figure 2;
Figure 4 is a perspective view of part of an inner member which is in accordance with the present invention;
Figure 5 is an enlarged perspective view of part of the inner member of Figure 4;
Figure 6 is a cross-sectional perspective view of a part of the inner member of Figure 4;
Figure 7 is a cross-sectional perspective view of a part of the inner member of Figure 4 with an outer member in place;
Figures 8a and 8b are plan and side elevations of containers containing beverage showing comparative beverage volumes between a beverage made using a prior art cartridge and a beverage made using a cartridge according to the present invention; and
Figures 9a and 9b are plan and side elevations of containers containing beverage showing comparative bubble size variation between a beverage made using a prior art cartridge and a beverage made using a cartridge according to the present invention.

Figure 1 shows a prior art cartridge 1 as described in the applicant's earlier European patent publication number EP 1 716 055. For a full description of the cartridge 1, the reader is directed to the disclosure of EP 1 716 055 which is incorporated herein by reference. In the following, only those parts of the cartridge 1 which relate to the present invention will be described in detail.

The cartridge 1 of EP 1 716 055 generally comprises an outer member 2, an inner member 3 and a laminate lid 5. The outer member 2, inner member 3 and laminate 5 are assembled to form the cartridge 1 which has a chamber 134 for containing one or more beverage ingredients 200, an inlet (not shown), an outlet 122 and a beverage flow path linking the inlet to the outlet 122.

The inner member 3 comprises a discharge spout 43 surrounded-by an outer tube 42 which is connected to the discharge spout 43 by annular flange 47. The inner member 3 also comprises a skirt portion 80 which is connected to the outer tube 42 by skirt ribs 87. An annular channel 69 is defined between the inner wall of the skirt portion 80 and the outer wall of the outer tube 42. The annular channel 69 has a lower portion 69L below the skirt ribs 87 and an upper portion 69U above the skirt ribs 87. Fluid communication between the lower portion 69L and the upper portion 69U of the annular channel 69 is provided by the spaces between the ribs 87. Finally, skirt portion 80 of inner member 3 comprises a bowl 101 for regulating the mixing of the beverage ingredient.

The beverage flow path passes through chamber 134, annular channel 69 and discharge spout 43 as will be described in greater detail below.

The inlet and outlet 122 are initially sealed by the laminate 5 and are opened in use by piercing or cutting of the laminate 5. The beverage flow path is defined by spatial inter-relationships between the outer member 2, inner member 3 and laminate 5. Other components may optionally be included in the cartridge 1, such as a filter.

The various types of cartridge shown in EP 1 716 055 may be used for dispensing roast and ground products or liquid products such as concentrated liquid milk. It is also possible to dispense liquid coffee products.

A particular advantage of the cartridges shown in Figures 18 and 34 of EP 1 716 055 is the provision of means for entraining air into the beverage, for example in the form of an eductor. As used herein, the term eductor refers to the use of an aperture, or similar structure, to form a jet of beverage, the aperture being located in the beverage flow path upstream of an air inlet and an expansion chamber, said aperture being arranged to produce a jet of beverage which jets into the expansion chamber to produce a low pressure zone in the vicinity of the air inlet which causes air to be drawn through the air inlet and to become entrained in the beverage stream.

As shown in Figure 1 (based on Figure 34 of EP 1 716 055) a rim 67 is provided on the inner member 3 upstanding from annular flange 47 joining outer tube 42 to discharge spout 43. The rim 67 surrounds an inlet 45 to the discharge spout 43. The rim 67 is provided with an inwardly directed shoulder 68. At one point around the circumference of the rim 67 a slot 70 is provided, the slot extending from an upper edge of rim 67 to a point marginally below the level of the shoulder 68.

An air inlet 71 is provided in annular flange 47 circumferentially aligned with the slot 70. The air inlet 71 comprises an aperture passing through the flange 47 so as to provide communication between a point above the flange 47 and the void space below the flange 47 between the outer tube 42 and discharge spout 43. The air inlet 71 comprises an upper frusto-conical portion and a lower cylindrical portion. The wall of the outer tube 42 in the vicinity of the air inlet 71 is shaped to form a chute leading from the air inlet 71 to the inlet 45 of the discharge spout 43.

Three axial ribs 105 are provided on the inner surface of the discharge spout 43 to direct the dispensed-beverage downwards towards the outlet 44 to help to confine the dispensed beverage into a relatively narrow, controlled stream.

As shown in Figure 1, when the cartridge is assembled, a cylindrical extension 18 of the outer member 2 is seated within the rim 67. The cylindrical extension 18 substantially closes off the inlet 45 of the discharge spout 43 including closing off the upper end of the slot 70. Because the slot 70 in the rim 67 extends below the level of the shoulder 68, an aperture 128 remains open to provide a fluid path through the annular flange 47. Thus on assembly, the slot 70 is configured to become an approximately square-shaped aperture 128.

In use, the cartridge 1 is inserted into a beverage preparation machine and the inlet and outlet 122 are opened by piercing members of the beverage preparation machine which perforate and fold back the laminate 5. An aqueous medium, typically water, under pressure enters the cartridge 1 through the inlet and is directed to flow into the chamber 134. The water is forced along the beverage flow path through the chamber 134 and mixes with the beverage ingredients 200 contained therein. The water is at the same time forced upwardly through the beverage ingredients.

The back pressure of beverage collecting in the chamber 134 forces the beverage under pressure through the aperture 128 emerging as a jet into a mixing chamber 49 at the upper end of the discharge spout 43. The jet of beverage passes directly over the air inlet 71. As the beverage enters the chute and inlet 45 of the discharge spout 43 the pressure of the beverage jet drops. As a result air is entrained into the beverage stream in the-form of a multitude of small air bubbles as the air is drawn up through the air inlet 71. The jet of beverage issuing from the aperture 128 turbulently flows within the mixing chamber 49 before being funnelled downwards to the outlet spout 44 where the beverage is discharged into a receptacle such as a cup where the air bubbles form the desired frothy appearance.

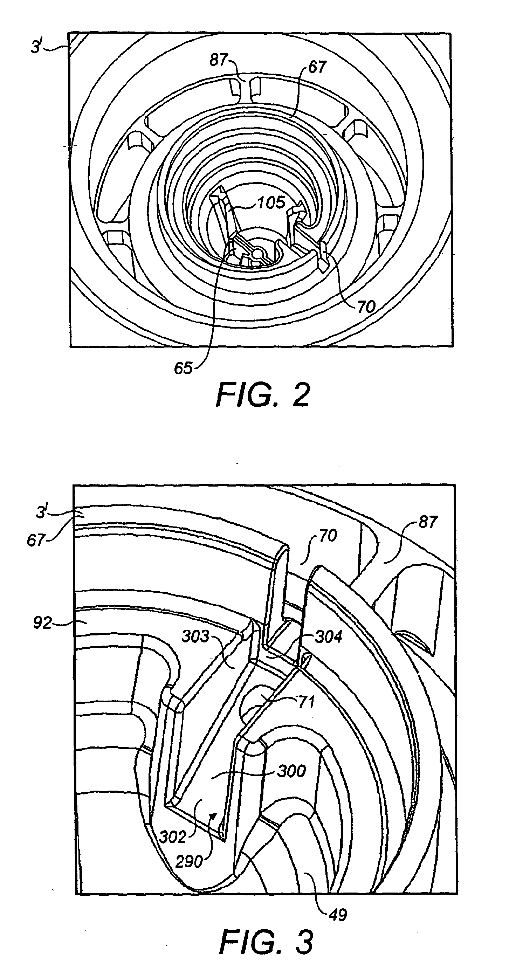

Figures 2 and 3 show perspective views of a cartridge having another inner member 3' according to the prior art. Many of the features of the inner member 3' are the same as described above with reference to inner member 3-and like numerals have been used to reference like features.

Inner member 3' differs from inner member 3 in the shape and size of the eductor, and in the addition of partition 65 in the lower portion of the discharge spout 43. The partition 65 helps to prevent the beverage spraying and/or splashing as it exits the discharge spout 43. In addition, inner member 3' has no bowl 101.

As best shown in Figure 3, the eductor of this cartridge is provided with an elongated chute 300 formed in the inner member 3'. The chute 300 comprises a lower surface 302, side walls 303 and upstream wall 304. The chute 300 further comprises a mouth 290 which is located at the downstream end of the chute 300 and which communicates with the mixing chamber 49. The slot 70 of the eductor is aligned with the chute 300 so that the chute defines a flow path from the aperture 128 (formed from the slot 70 on assembly of the cartridge) to the mixing chamber 49. Air inlet 71 opens into the chute 100 through its lower surface 302 proximate the upstream end of the chute 300.

The cross-sectional area of the chute 300, that is the internal cross-sectional area which is perpendicular to the flow direction and parallel to the upstream wall 304, increases gradually in the downstream direction from the upstream wall 304 to the mouth 290 of the chute 300. Thus, the cross-sectional area of the mouth 290 is greater than the cross-sectional area of the chute 300 in the vicinity of the upstream wall 304 and the air inlet 71. The gradual increase in cross-section of the chute 300 is achieved by the lower surface 302 gradually sloping downwards away from the upstream wall 304. The side walls 303 are substantially parallel such that the width of the chute 300 does not vary along its length. In use, the chute 300 is closed along its top by the lowermost face 31 of the cylindrical extension 18 when the cartridge 1 is assembled. The chute 300 therefore defines an expansion chamber downstream of the aperture 128.

In use, the jet or beverage emerges from the aperture 128 and enters the chute 300. The air inlet 71 is positioned within the chute 300 such that it opens into the low pressure area created by the jet. Because the air inlet 71 is open to atmosphere, air is drawn through the air inlet 71 and becomes entrained in the passing beverage stream. The beverage stream flows along the chute 300 and then on into the mixing chamber 49 where the entrained air and beverage continue to mix until they exit the cartridge via the outlet spout 44.

Prior art cartridges having inner members 3 and 3' as described above have been used successfully in domestic beverage machines to produce foamed beverages such as espresso, cappuccino-style coffee, and foamed dairy-based beverages. In order to further improve the foam quality an improved inner member 3" (described in detail below) has been developed according to the present invention. The improved inner member 3" produces a greater volume of foam having a more consistent distribution of smaller sized bubbles.

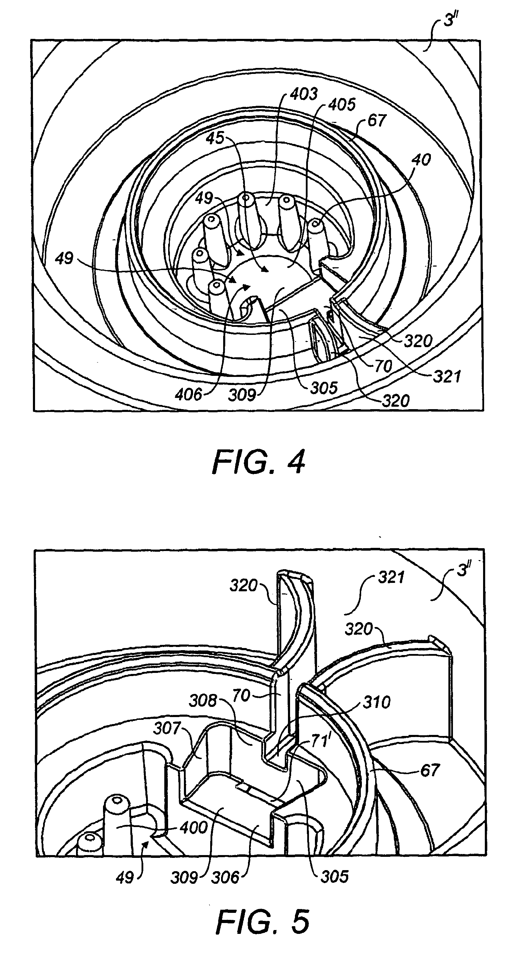

Figures 4 and 5 show perspective views of the improved inner member 3" forming part of an improved cartridge in accordance with the present invention. Some of the features of the inner member 3" are the same as described above with reference to inner members 3 and 3' and like numerals have been used to reference like features.

Inner member 3" is similar to inner member 3' discussed above except for the addition of projections 400 in the mixing chamber 49, the (optional) removal of the ribs 105 from the discharge spout 43, and the adaptation of the eductor. In addition, rather than the skirt portion 80 of inner member 3" being connected to the outer tube 42 by skirt ribs 87, the skirt portion 80 of inner member 3" is connected to the outer tube 42 by a skirt shoulder 87'.

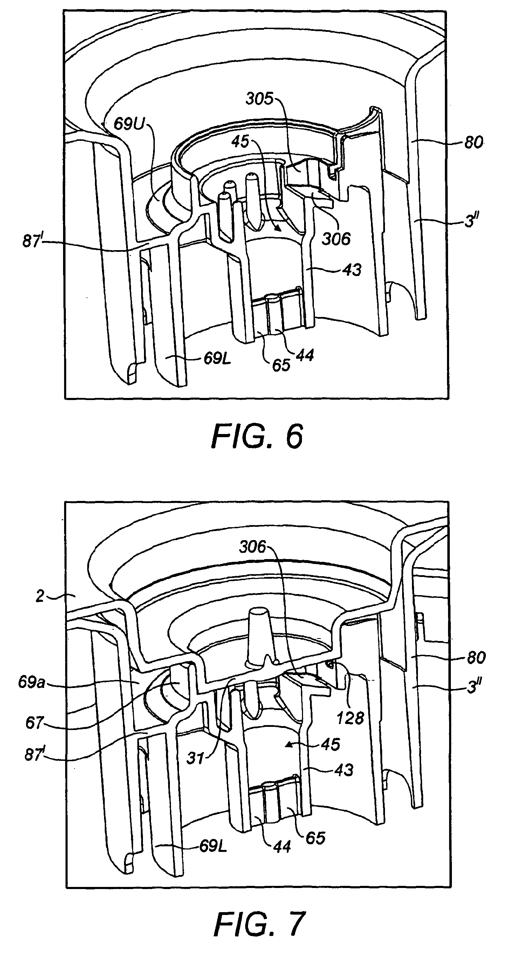

As best shown in Figures 4 and 6, the skirt shoulder 87' comprises a substantially continuous ring surrounding the outer tube 42. The skirt shoulder 87' has an opening (not shown) which is aligned with slot 70 in the annular rim 67. The opening in the skirt shoulder 87' provides fluid communication between the lower portion 69L of the annular channel 69 and the slot 70. Two flow direction walls 320 are located either side of the opening in the skirt shoulder 87. The flow direction walls 320 extend between the inner wall of the skirt portion 80 and the rim 67 of the outer tube 42 to define a fluted flow direction channel 321. As shown in Figure 7, in use, the upper portion 69U of the annular channel 69, which includes the flow channel 321, is closed along its top by the lowermost face 31 of the cylindrical extension 18 when the cartridge 1 is assembled.

As best shown in Figure 5, the slot 70 of inner member 3" communicates with a parallel sided groove 310 which leads into an expansion chamber 305 at an expansion chamber inlet to form an-expansion zone. The expansion chamber 305 comprises an upstream wall 308, two side walls 307 and lower surface or floor 306. The expansion chamber 305 further comprises an outlet 309 located at the downstream end of the expansion chamber 305 which communicates with the mixing chamber 49. In use, the expansion chamber 305 is closed along its top by the lowermost face 31 of the cylindrical extension 18 when the cartridge 1 is assembled. The expansion chamber 305 is therefore located downstream of the aperture 128.

The expansion chamber 305 is shaped such that the cross-sectional area, that is the cross-sectional area which is perpendicular to the flow direction and parallel to the upstream wall 308, of the inlet is significantly greater than the cross-sectional area of the jet generating groove 310. Furthermore, the cross-sectional area of the outlet 309 of the expansion chamber 305 is smaller than the cross-sectional area at an inlet of the expansion chamber 305, parallel to the upstream wall 308, in the vicinity of the upstream wall 308 and air inlet 71'. This decrease in cross-sectional area is preferably achieved by the side walls 307 which gradually converge along the length of the chamber 305, such that the width of the chamber 305 decreases along its length, and/or by the lower surface 306 which slopes upwardly from the base of the upstream wall 308 towards the outlet 309 (see Figures 6 and 7), such that the height of the chamber 305 gradually decreases along its length.

As shown in Figure 5, the air inlet is preferably in the form of an elongated slot 71' at the base of the upstream wall 308 of the expansion chamber 305 such that the slot 71' lies at the- root of the expansion chamber 305. The slot 71' extends widthways across the expansion chamber 305 but terminates short of both side walls 307 as shown in Figure 5. The air inlet 71' is located immediately downstream of the upstream wall 308 so that it is as close as possible to the point at which the jet of beverage, which emerges from the aperture 128, enters the expansion chamber 305. This ensures that the air inlet 71' is positioned in the area of lowest pressure in the expansion chamber 305. This helps to optimise the pressure difference across the air inlet 71' and therefore the amount of air drawn through the air inlet 71'. The air inlet 71' may be of any desired shape. However, it has been found that an air inlet in the form of an elongated slot is advantageous as this allows the air inlet to be positioned closer to the upstream end of the expansion chamber 305 than prior art inlets whilst still allowing an air inlet of enlarged size compared to prior art designs. In addition, an elongate slot allows a more robust forming tool to be used in manufacture compared to a mould pin of narrow diameter.

The reduced cross-sectional area of the expansion chamber outlet 309 is formed in a letter-box shape having a relatively large width and small height.

The discharge spout 43 defines an outlet 44 of the cartridge. The inlet 45 to the discharge spout 43 is specifically defined as a centrally located aperture in the floor of the mixing chamber 49. As shown most clearly in Figure 4, a plurality of projections 400 are provided in the mixing chamber 49 surrounding the inlet 45 of the discharge spout 43. The projections 400 have a shallow frusto-conical shape to -facilitate moulding.

The projections 400 are arranged in the mixing chamber 49 such that they surround a first portion 403 of a periphery of the inlet 45 to the discharge spout 43. A second portion of the periphery of the inlet 45 to the discharge spout 43 is free of projections 400 such that the second portion of the periphery defines an inlet zone 405 into an area 406 located substantially within the region bounded by the first portion of the periphery 403. The projections 400 are arranged such that the inlet zone 405 is positioned substantially across the mouth 309 of the expansion chamber 305. Thus, in use, beverage exiting the expansion chamber 305 through mouth 309 is initially unobstructed as it enters the mixing chamber 49.

The projections 400 are arranged in an arc. Preferably the arc is part of a circle. Six projections 400 are provided. The projections 400 project from the floor of the mixing chamber 49 and are free-standing such that they do not contact the roof.

In use, the cartridge is placed in a beverage preparation machine and water is injected into the cartridge as described above. As before a jet of beverage, such as a dairy-based beverage, emerges from the aperture 128 and enters the expansion chamber 305. A low pressure region is produced in the vicinity of the air inlet 71' and this causes air to be drawn through the slot of the air inlet 71' to become entrained in the passing beverage stream.

The configuration of the expansion chamber 305 creates a flow regime within the cartridge which encourages a greater volume of air to become entrained in the beverage stream than with prior art cartridges. Specifically, the expansion chamber 305 is configured such that, in use, a jet of beverage entering the expansion chamber 305, via jet groove 310, encounters a sudden large (in relation to the flow area of the jet) expansion in flow area at the inlet to the expansion chamber 305. As the jet of beverage exits the jet groove 310 it expands in width and depth. The cross-sectional flow area of the beverage stream increases in the downstream direction as it approaches the outlet 309 of the expansion chamber 305. The outlet 309 is sized such that the cross-sectional area and profile of the outlet 309 is substantially matched to the cross-sectional flow area and profile of the beverage stream at the downstream end of the expansion chamber 305 (i.e. at the outlet 309). Furthermore, because the beverage stream has a smaller cross-sectional flow area relative to the cross-sectional area of the expansion chamber 305 than in a prior art system, more of the beverage stream is surrounded by air at least at the upstream end of the expansion chamber 305. More of the available air is therefore able to become entrained in the beverage stream as the air can pass around the whole or majority of the beverage stream's circumference. This effect is enhanced by the shape of the air inlet slot 71' in the form of a slot which places the entire area of the air inlet in the zone of lowest pressure.

This effect is further enhanced by the tendency of a fluid jet to be attracted to the nearest surface (the Coanda effect), namely the lowermost face 31 of the outer member 2 which acts as a roof of the-expansion chamber 305 (see Figure 7). The beverage stream will therefore tend to attach to and spread across, the face 31 as it travels through the expansion chamber 305. This is not possible in the prior art cartridges where the expansion chamber is much narrower and the side walls of the expansion chamber therefore effect the flow dynamics of the beverage stream.

Because the cross-sectional area and profile of the inlet 309 are substantially matched to the cross-sectional flow area and profile of the beverage stream at the inlet 309, air and/or beverage is largely prevented from reentering the expansion chamber 305 from the mixing chamber 49 by the beverage stream exiting the expansion chamber 305. It has been found with prior art inner members, such as 3' described above, air and/or beverage that can re-enter low-pressure zone near the air inlet from the mixing chamber. This is undesirable since the re-circulating flow can partially block the air inlet preventing efficient air entry. This results in less-air being entrained into the issuing jet.

It has been found that the combination of an expansion chamber 305 having an inlet cross-sectional area which is greater than the cross-sectional area of the outlet 309, an outlet 309 the cross-sectional area and profiled which is substantially matched to the flow cross-sectional area and profile of the spray exiting the expansion chamber, and an air inlet 71' being located at the chamber inlet provides a significant improvement in the volume of foamed beverage produced. The cross-sectional area of the inlet 309 is ideally substantially the same as the cross-sectional flow area of the beverage stream since, any larger would allow back flow of beverage from the mixing chamber, and any smaller would result in the beverage stream unduly splashing or impacting on the surfaces of the expansion chamber and flowing back into the expansion chamber.

It is not necessary that the expansion chamber be formed of substantially flat walls as described above in relation to inner member 3". The configuration of the expansion chamber 305 of inner member 3" is particularly suitable for high volume manufacture. However, any geometry having a larger upstream flow area that downstream flow area, and an outlet area which substantially matches the beverage stream flow area at the outlet could be used.

The direction of the jet emerging from the aperture 128 is initially controlled by the parallel sided jet groove 310 such that there is less sensitivity to slight variations in part dimensions or misalignment. However, the groove 310 may be omitted such that the slot 70 communicates directly with the expansion chamber 305 through the upstream wall 308. In addition, the lower surface 306 of the expansion chamber 305 may be substantially perpendicular to the upstream wall 308.

The stream of beverage and entrained air exits the expansion zone 305 via outlet 309 into the mixing chamber 49 where it continues to mix. Because the inlet zone 405 is located across the outlet 309 of the expansion chamber 305, the beverage stream is unobstructed as it passes into the region 406 surrounded by the projections 400.

The projections 400 help to eliminate open spaces within the mixing chamber 49 without creating a large pressure drop. They also encourage more uniform turbulence patterns within the mixing chamber 49 and help to eliminate eddies. This, in turn, helps to prevent small bubbles entrained in the beverage from coalescing to create larger bubbles. The foam produced is therefore of a better quality than foam produced from prior art cartridges, since it has smaller bubbles of a more uniform size.

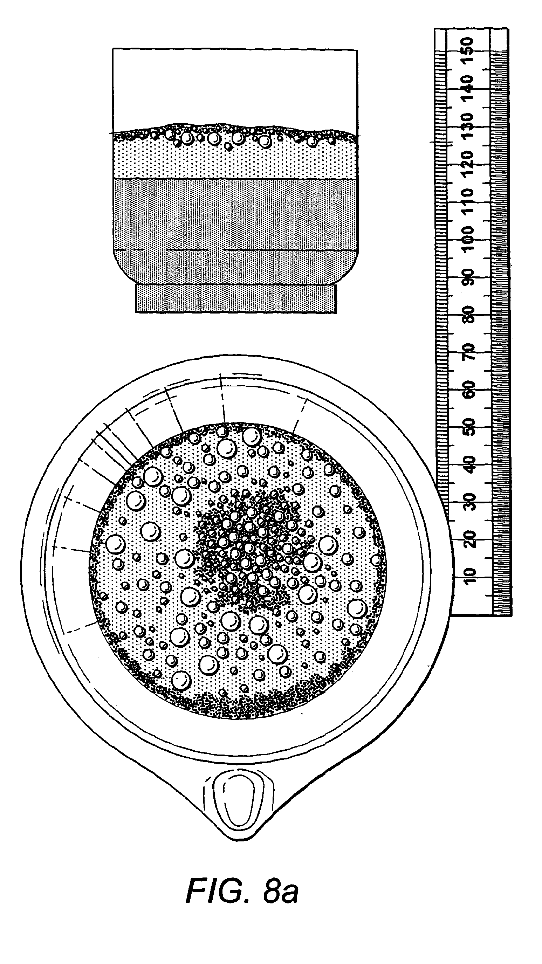

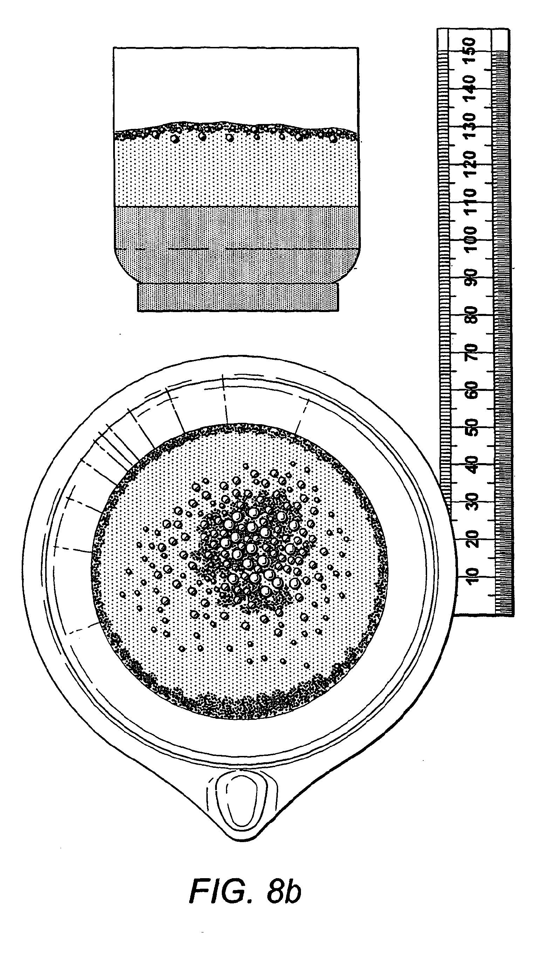

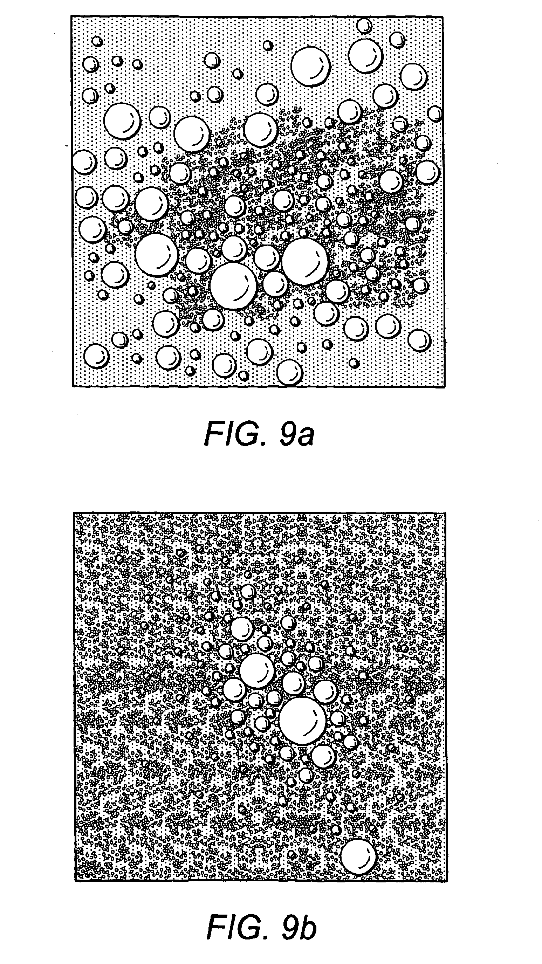

Figures 8a and 9a show drawings of a foamed milk beverage when made with a cartridge having a prior art inner member (such as inner member 3 or 3'), and Figures 8b and 9b show photographs of a foamed milk beverage when made with a cartridge having an inner member according to the present invention. As can be seen from Figures 8a and 8b, the-volume of foamed milk beverage made with the cartridge having the prior art inner member (Figure 8a) is considerably less-than the volume of foamed milk beverage made using a cartridge having an inner member according to the present invention. (Figure 8b). Furthermore, as can be seen from Figures 9a and 9b, the maximum bubble size of the foamed milk beverage made with the cartridge having the prior art inner member (Figure 9a) is considerably greater than the maximum bubble size of the foamed milk beverage made using a cartridge having an inner member according to the present invention (Figure 9b). In addition, the foamed milk beverage made using a cartridge having an inner member according to the present invention has a more consistent bubble size leading to better mouth feel.

The invention has been described above by way of example embodied in a cartridge formed from, amongst other parts, an outer member and an inner member. In particular, the aperture 128 has been described as delimited by portions of the outer and inner members. However, it is to be -understood that the invention is also applicable to apertures formed in a single component rather than from the junction of two components. In addition, whilst the described embodiment of cartridge comprises the improved eductor geometry of the present invention and the improved use of obstructions in the mixing chamber it should be understood that the improved eductor geometry can be utilised in a cartridge according to the present invention without the presence of the improved obstructions and vice versa.

## Claims

1. A cartridge (1) containing one or more beverage ingredients, said cartridge (1) comprising:
an inlet for the introduction of an aqueous medium into the cartridge (1);
an outlet (44) for a beverage produced from said one or more beverage ingredients;
an aperture (128) in a beverage flow path linking the inlet to the outlet (44) which generates, in use, f a jet of beverage; **characterised by**
an expansion chamber (305) located downstream of the aperture (128), wherein the expansion chamber (305) comprises an expansion chamber inlet (310) in an upstream wall (308) for receiving the jet of beverage and an expansion chamber outlet (309); and an air inlet (71') located in the expansion chamber (305) in the vicinity of the expansion chamber inlet (310);
wherein the expansion chamber (305) has a cross-sectional area which is perpendicular to the direction of flow of the jet of beverage and parallel to the upstream wall (308), and said cross-sectional area decreases in a downstream direction from the expansion chamber inlet (310) to the expansion chamber outlet (309), and the cross-sectional area and profile of the expansion chamber outlet (309) are sized to be substantially the same as the cross-sectional area and profile of the beverage stream as it passes through the outlet (309).

2. A cartridge (1) as claimed in claim 1 wherein the cross-sectional area of the expansion chamber inlet (310) is greater than the cross-sectional area of the jet generating aperture (128).

3. A cartridge (1) as claimed in claim 2 wherein a floor (306) and a roof (31) of the expansion chamber (305) converge towards one another in the downstream direction.

4. A cartridge (1) as claimed in any preceding claim wherein the expansion chamber (305) comprises opposing sidewalls (307) and the sidewalls (307) converge in the downstream direction.

5. A cartridge (1) as claimed in claim 3 or claim 4 wherein the aperture (128) is aligned such that the jet of beverage issuing from the aperture (128) passes from the expansion chamber inlet (310) to the expansion chamber outlet (309) substantially without contacting the floor of the expansion chamber (305) and/or the one or more sidewalls (307) of the expansion chamber (305).

6. A cartridge (1) as claimed in any preceding claim
wherein the air inlet (71') is formed in a floor of the expansion chamber (305) and preferably comprises an elongated slot.

7. A cartridge (1) as claimed in claim 6 wherein the elongated slot is aligned perpendicularly to the direction of flow of a jet of beverage issuing from the aperture (128).

8. A cartridge (1) as claimed in any preceding claim further comprising a mixing chamber (49) having an outlet aperture communicating with the outlet (40) of the cartridge (1) ;
the mixing chamber (49) further comprising a plurality of projections (400) located in spaced arrangement around the mixing chamber outlet aperture.

9. A cartridge (1) as claimed in claim 8 wherein the projections (400) are arranged around a first portion of a periphery of the mixing chamber outlet aperture and a second portion of the periphery of the mixing chamber outlet aperture is free of the projections (400), wherein the second portion of the periphery is aligned with the expansion chamber outlet and is sized such that a stream of beverage issuing, in use, from the expansion chamber outlet is enabled to enter a central region of the mixing chamber (49) without first impacting on the projections (400).

10. A cartridge (1) as claimed in claim 9 wherein the projections (400) are arranged in an arc, which is preferebly circular.

11. A cartridge (1) as claimed in claim 9 or claim 10 comprising between 3 and 20 projections (400).

12. A cartridge (1) as claimed in any of claims 9 to 11 wherein the projections (400) act to reduce areas of stagnant flow in use within the mixing chamber (49).

13. A cartridge (1) as claimed in any preceding claim wherein the one or more beverage ingredients are liquid ingredients, preferably dairy-based.

14. A cartridge (1) as claimed in any preceding claim which is sealed prior to use in a beverage preparation machine to form a beverage.

15. A method of making a beverage from a cartridge (1) containing one or more beverage ingredients as claimed in any one of the preceding claims, the method comprising the steps of :
generating a jet of beverage into an expansion chamber (305) in the cartridge (1); and
entraining air into the jet of beverage as it passes through the expansion chamber (305).

16. A method of making a beverage from a cartridge (1) as claimed in claim 15, the method comprising the steps of placing the cartridge (1) in a beverage dispensing machine adapted to receive the cartridge (1) and dispensing a beverage therefrom.

17. A beverage dispensing system comprising a cartridge (1) as claimed in any one of claims 1 to 14 and a beverage dispensing machine adapted to receive the cartridge (1) and to dispense a beverage therefrom.

## Patentansprüche

1. Patrone (1), die eine oder mehrere Getränkezutaten aufweist, wobei die besagte Patrone (1) folgendes aufweist:
einen Einlass für die Eingabe eines wässrigen Mediums in die Patrone (1);
einen Auslass (44) für ein Getränk, das aus der besagten einen oder den besagten mehreren Getränkezutaten hergestellt wird;
eine Öffnung (128) in einem Getränkefließweg, die den Einlass mit dem Auslass (44) verbindet und, im Einsatz, einen Getränkestrahl erzeugt; **gekennzeichnet durch**:
eine Expansionskammer (305), die der Öffnung (128) nachgelagert positioniert ist, wobei die Expansionskammer (305) einen Expansionskammereinlass (310) in einer vorgelagerten Wand (308) zur Aufnahme des Getränkestrahls und einen Expansionskammerauslass (309) aufweist; und einen Lufteinlass (71'), der in der Expansionskammer (305) nahe des Expansionskammereinlasses (310) positioniert ist;
wobei die Expansionskammer (305) eine Querschnittsfläche aufweist, die lotrecht zu der Fließrichtung des Getränkestrahls und parallel zu der vorgelagerten Wand (308) ist, und wobei die besagte Querschnittsfläche in einer nachgelagerten Richtung von dem Expansionskammereinlass (310) zu dem Expansionskammerauslass (309) abnimmt, und die Querschnittsfläche und das Profil des Expansionskammerauslasses (309) so bemessen sind, dass sie im Wesentlichen gleich sind wie die Querschnittsfläche und das Profil des Getränkestrahls, während er den Auslass (309) durchströmt.

2. Patrone (1) nach Anspruch 1, wobei die Querschnittsfläche des Expansionskammereinlasses (310) größer ist als die Querschnittsfläche der den Strahl erzeugenden Öffnung (128).

3. Patrone (1) nach Anspruch 2, wobei ein Boden (306) und ein Dach (31) der Expansionskammer (305) in der nachgelagerten Richtung zueinander konvergieren.

4. Patrone (1) nach einem der vorhergehenden Ansprüche, wobei die Expansionskammer (305) gegenüberliegende Seitenwände (307) aufweist und wobei die Seitenwände (307) in der nachgelagerten Richtung konvergieren.

5. Patrone (1) nach Anspruch 3 oder Anspruch 4, wobei die Öffnung (128) ausgerichtet ist, so dass der Getränkestrahl, der aus der Öffnung (128) ausströmt, von dem Expansionskammereinlass (310) zu dem Expansionskammerauslass (309) im Wesentlichen ohne Kontakt zu dem Boden der Expansionskammer (305) und/oder der einen oder den mehreren Seitenwänden (307) der Expansionkammer (305) strömt.

6. Patrone (1) nach einem der vorhergehenden Ansprüche, wobei der Lufteinlass (71') in einem Boden der Expansionskammer (305) gebildet ist und bevorzugt einen länglichen Schlitz aufweist.

7. Patrone (1) nach Anspruch 6, wobei der längliche Schlitz lotrecht zu der Fließrichtung eines Getränkestrahls, der aus der Öffnung (128) ausströmt, ausgerichtet ist.

8. Patrone (1) nach einem der vorhergehenden Ansprüche, die des Weiteren eine Mischkammer (49) mit einer Auslassöffnung aufweist, die mit dem Auslass (40) der Patrone (1) in Verbindung steht;
wobei die Mischkammer (49) des Weiteren eine Vielzahl von Vorsprüngen (400) aufweist, die in verteilter Anordnung um die Mischkammerauslassöffnung positioniert sind.

9. Patrone (1) nach Anspruch 8, wobei die Vorsprünge (400) um einen ersten Abschnitt eines Umfangs der Mischkammerauslassöffnung angeordnet sind und ein zweiter Abschnitt des Umfangs der Mischkammerauslassöffnung frei von den Vorsprüngen (400) ist, wobei der zweite Abschnitt des Umfangs mit dem Expansionskammerauslass fluchtet und so bemessen ist, dass ein Getränkestrom, der, im Einsatz, aus dem Expansionskammerauslass ausströmt, in einen zentralen Bereich der Mischkammer (49) gelangen kann, ohne zuerst auf die Vorsprünge (400) einzuwirken.

10. Patrone (1) nach Anspruch 9, wobei die Vorsprünge (400) in einem Bogen angeordnet sind, der bevorzugt kreisrund ist.

11. Patrone (1) nach Anspruch 9 oder Anspruch 10, die zwischen 3 und 20 Vorsprünge (400) aufweist.

12. Patrone (1) nach einem der Ansprüche 9 bis 11, wobei die Vorsprünge (400) so wirken, dass sie Bereiche stagnierenden Flusses im Einsatz innerhalb der Mischkammer (49) verringern.

13. Patrone (1) nach einem der vorhergehenden Ansprüche, wobei die eine oder mehreren Getränkezutaten flüssige Zutaten sind, bevorzugt auf Milch basierend.

14. Patrone (1) nach einem der vorhergehenden Ansprüche, welche vor dem Einsatz in einer Getränkezubereitungsmaschine zur Bildung eines Getränks versiegelt ist.

15. Verfahren zur Herstellung eines Getränks aus einer Patrone (1), die eine oder mehrere Getränkezutaten nach einem der vorhergehenden Ansprüche aufweist, wobei das Verfahren die folgenden Schritte aufweist:
Erzeugen eines Getränkestrahls in eine Expansionskammer (30) in der Patrone (1); und
Einführen von Luft in den Getränkestrahl, während er durch die Expansionskammer (305) strömt.

16. Verfahren zur Herstellung eines Getränks aus einer Patrone (1) nach Anspruch 15, wobei das Verfahren die Schritte des Einbringens der Patrone (1) in einen Getränkeautomaten, der dazu angepasst ist, die Patrone (1) aufzunehmen, und des Ausgebens eines Getränks davon aufweist.

17. Getränkeautomatensystem, das eine Patrone (1) nach einem der Ansprüche 1 bis 14 aufweist und einen Getränkeautomaten, der dazu angepasst ist, die Patrone (1) aufzunehmen und ein Getränk davon auszugeben.

## Revendications

1. Cartouche (1) contenant un ou plusieurs ingrédients de boisson, ladite cartouche (1) comprenant :
une entrée pour l'introduction d'un milieu aqueux dans la cartouche (1) ;
une sortie (44) pour une boisson produite à partir dudit ou desdits ingrédients de boisson ;
une ouverture (128) dans un passage d'écoulement de boisson reliant l'entrée à la sortie (44), qui produit, à l'utilisation, un jet de boisson ; **caractérisée par**
une chambre d'expansion (305) située en aval de l'ouverture (128), la chambre d'expansion (305) comprenant une entrée de chambre d'expansion (310) dans une paroi d'amont (308) pour recevoir le jet de boisson et une sortie de chambre d'expansion (309) ; et une entrée d'air (71') située dans la chambre d'expansion (305) au voisinage de l'entrée de chambre d'expansion (310) ;
la chambre d'expansion (305) ayant une section transversale qui est perpendiculaire à la direction d'écoulement du jet de boisson et parallèle à la paroi d'amont (308), et ladite section transversale allant en diminuant dans une direction d'aval de l'entrée de chambre d'expansion (310) à la sortie de chambre d'expansion (309), et la section transversale et le profil de la sortie de chambre d'expansion (309) étant dimensionnés pour être sensiblement identiques à la section transversale et au profil du flux de boisson tandis qu'il passe par la sortie (309).

2. Cartouche (1) selon la revendication 1, dans laquelle la section transversale de l'entrée de chambre d'expansion (310) est plus grande que la section transversale de l'ouverture (128) de production de jet.

3. Cartouche (1) selon la revendication 2, dans laquelle un plancher (306) et un toit (31) de la chambre d'expansion (305) convergent l'un vers l'autre dans la direction d'aval.

4. Cartouche (1) selon l'une quelconque des revendications précédentes, dans laquelle la chambre d'expansion (305) comprend des parois latérales (307) opposées et les parois latérales (307) convergent dans la direction d'aval.

5. Cartouche (1) selon la revendication 3 ou la revendication 4, dans laquelle l'ouverture (128) est alignée de manière que le jet de boisson sortant par l'ouverture (128) passe de l'entrée de chambre d'expansion (310) à la sortie de chambre d'expansion (309) sensiblement sans contacter le plancher de la chambre d'expansion (305) et/ou la ou les parois latérales (307) de la chambre d'expansion (305).

6. Cartouche (1) selon l'une quelconque des revendications précédentes, dans laquelle l'entrée d'air (71') est formée dans un plancher de la chambre d'expansion (305) et comprend, de préférence, une fente allongée.

7. Cartouche (1) selon la revendication 6, dans laquelle la fente allongée est alignée perpendiculairement à la direction d'écoulement d'un jet de boisson sortant par l'ouverture (128).

8. Cartouche (1) selon l'une quelconque des revendications précédentes, comprenant, en outre, une chambre de mélange (49) comportant une ouverture de sortie communiquant avec la sortie (40) de la cartouche (1) ;
la chambre de mélange (49) comprenant, en outre, une pluralité de saillies (400) espacées autour de l'ouverture de sortie de chambre de mélange.

9. Cartouche (1) selon la revendication 8, dans laquelle les saillies (400) sont agencées autour d'une première partie d'une périphérie de l'ouverture de sortie de chambre de mélange et une seconde partie de la périphérie de l'ouverture de sortie de chambre de mélange est dépourvue de saillies (400), la seconde partie de la périphérie étant alignée avec la sortie de chambre d'expansion et étant dimensionnée de manière qu'un flux de boisson sortant, à l'utilisation, par la sortie de chambre d'expansion puisse pénétrer dans une région centrale de la chambre de mélange (49) sans avoir d'abord un impact sur les saillies (400).

10. Cartouche (1) selon la revendication 9, dans laquelle les saillies (400) sont agencées en un arc, qui est, de préférence, circulaire.

11. Cartouche (1) selon la revendication 9 ou la revendication 10, comprenant entre 3 et 20 saillies (400).

12. Cartouche (1) selon l'une quelconque des revendications 9 à 11, dans laquelle les saillies (400) servent à réduire des zones d'écoulement stagnant, à l'utilisation, au sein de la chambre de mélange (49).

13. Cartouche (1) selon l'une quelconque des revendications précédentes, dans laquelle l'ingrédient ou les ingrédients de boisson sont des ingrédients liquides, de préférence, laitiers.

14. Cartouche (1) selon l'une quelconque des revendications précédentes, qui est scellée avant utilisation dans une machine de préparation de boisson afin de former une boisson.

15. Procédé de fabrication de boisson à partir d'une cartouche (1) contenant un ou plusieurs ingrédients de boisson selon l'une quelconque des revendications précédentes, le procédé comprenant les étapes consistant à :
produire un jet de boisson au sein d'une chambre d'expansion (305) dans la cartouche (1) ; et
entraîner de l'air dans le jet de boisson tandis qu'il passe par la chambre d'expansion (305).

16. Procédé de fabrication de boisson à partir d'une cartouche (1) selon la revendication 15, le procédé comprenant les étapes consistant à placer la cartouche (1) dans une machine de préparation de boisson apte à recevoir la cartouche (1) et à distribuer une boisson.

17. Système de distribution de boisson comprenant une cartouche (1) selon l'une quelconque des revendications 1 à 14 et une machine de distribution de boisson apte à recevoir la cartouche (1) et à distribuer une boisson.
